# EUROPÄISCHE PATENTSCHRIFT

(11) **EP 0 900 762 B1**
(45) Veröffentlichungstag und Bekanntmachung des Hinweises auf die Patenterteilung: **05.06.2002**
(21) Anmeldenummer: 98116149.0
(22) Anmeldetag: 27.08.1998
(51) Int. Cl.: C01B 25/10

(54) **Verfahren zur Reinigung von Phosphoroxychlorid**
Process for purifying phosphorus oxychloride
Procédé de purification d' oxychlorure de phosphore

(30) Priorität: 03.09.1997 AT 147197
(43) Veröffentlichungstag der Anmeldung: 10.03.1999
(73) Patentinhaber: DSM Fine Chemicals Austria Nfg GmbH & Co KG, 4021 Linz (AT)
(72) Erfinder: Schwendinger, Karl, 4040 Linz (AT); Kloimstein, Engelbert, Ing., 4070 Eferding (AT)
(74) Vertreter: Klostermann, Ingrid

(56) Entgegenhaltungen:
- EP-A- 0 891 942
- DE-A- 3 908 449
- FR-A- 2 156 649
- CHEMICAL ABSTRACTS, vol. 110, no. 22, 29. Mai 1989 Columbus, Ohio, US; abstract no. 195841, POLA JOSEF ET AL.: "Removal of organic hakides from phosphoryl chloride" XP002083561 & CS 252 292 A1. November 1988
- DATABASE WPI Section Ch, Week 9644 Derwent Publications Ltd., London, GB; Class E36, AN 96-439240 XP002083603 & JP 08 217427 A (NIPPON SODA CO) , 27. August 1996
- CHEMICAL ABSTRACTS, vol. 99, no. 14, 3. Oktober 1983 Columbus, Ohio, US; abstract no. 107438, ZEL'VENSKII YA D. ET AL: "Purification chloride in fractionation bubble columns" XP002083562 & ZH. PRIKL. KHIM, Bd. 56, Nr. 6, 1983, Seiten 1247-1252, Leningrad

## Beschreibung

Phosphoroxychlorid wird industriell aus Phosphortrichlorid durch Oxidation mit Luftsauerstoff hergestellt. Dabei entsteht ein sehr reines, kaum mit organischen Stoffen verunreinigtes Produkt.

In den letzten Jahren wurden Chlorierungsverfahren zur Herstellung chlorierter Heterocyclen, bevorzugt von Stickstoffheterocyclen, aus Hydroxyverbindungen mit Phosphoroxychlorid und anschließender oder gleichzeitiger POCl₃ Regeneration mit PCI₅, das auch in situ während der Chlorierungsreaktion aus PCl₃ und Chlor gebildet werden kann, bekannt.

Das durch Abdestillation rückgewonnene POCl₃ ist meistens durch organische, größtenteils chlorierte Verbindungen verunreinigt, die eine Wiederverwertung erschweren oder unmöglich machen. Die Ursachen sind organische Stoffe mit einem ähnlichen Siedepunkt, wie POCl₃, so daß eine destillative Abtrennung von im ppm Bereich vorhandenen störenden Stoffe nur schwer oder überhaupt unmöglich wird. Aufgabe der Erfindung war es, diese teilweise sehr reaktiven Stoffe wirkungsvoll von Phosphoroxychlorid abzutrennen.

Diese Aufgabe konnte nun unerwarteterweise durch Zusatz von organischen tertiären Aminen wie Trialkylaminen, Pyridinen, Anilinen und einem speziellen Rücklaufverhältnis bei der fraktionierten Destillation gelöst werden.

Gegenstand der vorliegenden Erfindung ist demnach ein Verfahren zur Reinigung von rückgewonnenem oder regenerierten, durch reaktive organische Verbindungen verunreinigtem Phosphoroxychlorid mit 0,1 bis 5 Gew.% eines organischen Amines mit 1 oder 2 tertiären N-Atomen und einem Siedepunkt über dem Siedepunkt von Phosphoroxychlorid und fraktionierte Destillation bei Normaldruck, das dadurch gekennzeichnet ist, dass bei der fraktionierten Destillation, bis zum Erreichen des Siedepunktes von reinem Phosphoroxychlorid am Kopf der Destillationskolonne, ein Rücklaufverhältnis A:R von 1:1 bis 1:4 eingestellt wird und anschließend bei einem Rücklaufverhältnis A:R von 1:1 bis 4:1 das reine Phosphoroxychlorid entnommen wird.

Bei dem erfindungsgemäßen Verfahren wird Phosphoroxychlorid (POCl₃), das im Anschluß an Chlorierungsreaktionen rückgewonnen oder regeneriert wird, von reaktiven organischen Verbindungen gereinigt. Unter Chlorierungsreaktionen sind dabei Verfahren zur Herstellung von chlorierten Heterocyclen, insbesondere von chlorierten Stickstoffheterocyclen wie etwa Chlorpyrimidine zu verstehen.

Störende Verunreinigungen sind dabei beispielsweise verschiedene Carbonsäurechloride, wie etwa Mono-, Di- und Trichlorcarbonsäuren, sowie Carbonsäurenitrile.

Besonders geeignet ist das erfindungsgemäße Verfahren zur Entfernung von C₂-C₄-Carbonsäurederivaten, insbesondere von Essigsäurederivaten, die aus verschiedenen Einsatzprodukten oder aus Verunreinigungen derselben stammen.
Zur Entfernung der störenden Verunreinigungen wird das zu reinigende POCl₃ mit organischen Aminen, die 1 oder 2 tertiäre N-Atome besitzen, versetzt.
Geeignete Amine mit 1 oder 2 tertiären N-Atomen sind dabei solche, die einen höheren Siedepunkt als POCl₃ aufweisen. Bevorzugt liegt deren Siedepunkt über 150°C, besonders bevorzugt über 200°C.
Beispiele für geeignete Amine sind Trialkylamine mit 4 bis 12 C-Atomen in den Alkylteilen. Die Alkylteile können dabei gleich oder verschieden, sowie linear oder verzweigt sein. Bevorzugt werden Trialkylamine mit 4 bis 8 C-Atomen im Alkylteil eingesetzt, wobei die Alkylteile wiederum bevorzugt gleich sind.

Geeignete Trialkylamine sind demnach beispielsweise n-Tributylamin, n-Trihexylamin, n-Trioctylamin, n-Tridecylamin u.s.w.

Weitere Amine, die im erfindungsgemäßen Verfahren eingesetzt werden können, sind Pyridine, die ein bis drei Substituenten aufweisen. Geeignete Substituenten sind beispielsweise C₁ bis C₄-Alkylgruppen, Arylgruppen oder Chlor. Beispiele für geeignete Pyridine sind 2-, 3- oder 4-Methylpyridin, 2,4-Dimethylpyridin, 2,4,6-Trimethylpyridin, 5-Ethyl-2-Methylpyridin, u.s.w.. Pyridine, die durch Arylgruppen substitueirt sein können, sind dabei beispielsweise 2-Phenyl-pyridin u.a., aber auch benzokondensierte Ringsysteme, wie Chinolin und Isochinolin.

Als geeignete tertiäre Amine kommen weiters N,N- substituierte Aniline oder Toluidine, wie etwa N,N-Di-C₁-C₄-alkylaniline bzw.-toluidine, beispielsweise N,N-Dimethylanilin u.s.w., in Frage.

Die Menge an zugesetztem Amin richtet sich dabei nach der vorhandenen Menge an Verunreinigungen. Bevorzugt werden 0,1 bis 5 Gew.%, bezogen auf POCl₃, an Amin eingesetzt. Besonders bevorzugt werden 0,2 bis 2 Gew.% an Amin zugesetzt.
Nach Zugabe des Amins, wird das so erhaltene Reaktionsgemisch auf Rückflußtemperatur erhitzt und etwa 10 bis 60 Minuten bei dieser Temperatur reagieren gelassen. Im Anschluß daran wird das gereinigte POCl₃ mittels fraktionierter Destillation aus dem Reaktionsgemisch isoliert. Dazu wird bevorzugt eine Destillationskolonne mit 5 -10 theoretischen Böden verwendet.
In der ersten Phase der Destillation wird ein Rücklaufverhältnis A: R von 1 : 1 1 bis 1 : 4, besonders bevorzugt von 1 : 2 bis 1 : 3 eingestellt und zuerst die leicht flüchtigen Verbindungen abgetrennt. Ist am Kopf der Kolonne der Siedepunkt von reinem POCl₃ erreicht, wird sodann bei einem Rücklaufverhältnis A: R von 1 : 1 bis 4 : 1, bevorzugt bis 3 : 1, das reine POCl₃ entnommen.

Der Destillationsrückstand kann in der Destillationsblase verbleiben und gemeinsam mit der nächsten Charge oder mit den gesammelten Vorläufen wieder einer Destillation unterzogen werden.

Das durch das erfindungsgemäße Verfahren erhaltene, gereinigte POCl₃ entspricht den für eine Wiederverwendung wichtigen Kriterien, die durch Messung des Erstarrungspunktes (>0,8°C), des organischen Kohlenstoffgehaltes (TOC <200 ppm), des Gehaltes an Fe, Cr, Ni (<5 ppm), sowie durch Färbetests mit Pyridin und gaschromatische Untersuchungen überprüft werden.

### Beispiel 1

In einem 1I Kolben mit Thermometer, Heizkorb, einer 1 m langen Füllkörperkolonne mit 3 mm Raschigringen gefüllt, Rückflußteiler, Thermometer und Rückflußkühler wurden 500 ml Phosphoroxichlorid enthaltend 400 ppm TOC (rückgewonnen aus einer Chlorierungsreaktion zur Herstellung von 4,6-Dichlorpyrimidin) mit 5,0 g n-Tributylamin versetzt und zum Rückflußkochen erhitzt. Nach 30 Minuten totalem Rücklauf hatte sich eine KolonnenKopftemperatur von 101,8 °C eingestellt. Anschließend wurde auf ein Rücklaufverhältnis von 1 : 3 eingestellt. Nach 10 ml Destillatabnahme waren 103,1 °C, nach 25 ml 105,3 °C erreicht, die Kompftemperatur blieb dann konstant bei dieser Temperatur. Nachdem 40 ml Destillat nach 20 Min. Destillationszeit vorlagen, wurde auf Hauptfraktion umgeschaltet und das Rücklaufverhältnis auf 3 : 1 umgestellt. Nach 80 Min. Destillationszeit und einer konstanten Übergangstempeatur von 105,3 °C wurden 420 ml Hauptfraktion entnommen. Das Produkt war farblos, enthielt 50 ppm TOC und keine Schwermetalle im ppm-Bereich, der Erstarrungspunkt lag bei 1,1 °.
Dem schwarzgefärbten flüssigen Rückstand wurden weiter 500 ml POCl₃ zugesetzt und wie vorher beschrieben die Destillation durchgeführt. Neben 40 ml Vorlauf wurden wieder 420 ml Hauptfraktion entnommen, das wiederum den Spezifikationsanforderungen entsprach. Es wurden 60 ppm TOC gefunden. Nun wurden neuerlich 500 ml POCl₃ nachgefüllt und wieder die Destillation durchgeführt. Die 420 ml Hauptfraktion enthielt 100 ppm TOC und lag beim Pyridintest im Grenzbereich in Bezug auf Färbung. Alle übrigen Kriterien waren in Ordnung.
Nach einer weiteren Zugabe von 500 ml POCl₃ und Durchführung der Destillation wurden 480 ml Destillat als Hauptfraktion entnommen, das 110 ppm TOC enthielt aber im Pyridintest nicht mehr entsprach. Die Versuchsreihe wurde mit folgenden Ergebnissen abgebrochen:

Einsatz 2000 ml aus Chlorierungsreaktionen gewonnenes POCl₃
160 ml Vorlauf = 8 %
1740 ml Hauptlauf = 87 %
100 ml Rücklauf = 5 %

Unter Einsatz von 5 g Tributylamin wurden 1260 ml oder 2100 g reines POCl₃ erhalten das entspricht einem Tributylaminaufwand von 0,24 % auf reines POCl₃ bezogen oder 0,2 % auf eingesetztes, verunreinigtes POCl₃ bezogen.

### Beispiel 2:

In einem 21 Kolben mit Kolonne und Rückflußteiler wie im Beispiel 1 beschrieben, wurden 1500 ml rückgewonnenes und den Spezifikationsanforderungen nicht entsprechendes POCl₃ enthaltend 400 ppm TOC mit 25 g Trioctylamin versetzt und dann wie in Beispiel 1 beschrieben destillativ aufgearbeitet. Nach 1/2 Stunden Rückflußkochen blieb die Kopftemperatur bei 99,8 °C konstant. Nach Abnahme von 55 ml Destillat bei einem Rücklaufverhältnis von 1 : 3 stellte sich eine Kopftemperatur von 105,4 °C ein, nach weiteren 50 ml Destillat blieb die Temperatur bei 105,7 °C konstant. Es wurden 27 Minuten für die Abdestillation der 105 ml Vorlauf benötigt. Nun wurde auf Hauptfraktrion bei einem Rücklaufverhältnis von 3 : 1 umgestellt und 1300 ml Destillat (2 x 500 ml, 1 x 200 ml, 1 x 100 ml) abgenommen. Die Kopftemperatur blieb bei 105,7 °C konstant. Die gesamt 1300 ml Hauptfraktionen entsprachen den Reinheitsanforderungen.

Dem verbleibenden Sumpf wurden weitere 1500 ml verunreinigtes POCl₃ zugesetzt und der Destillationsvorgang wiederholt. Nach 110 ml Vorlauf wurden 1370 ml Hauptlauf entnommen der allen Spezifikationsanforderungen entsprach. Aus 3000 ml Roh-POCl₃ wurden 215 ml Vorlauf entsprechend 7,2 % und 2670 ml Reinprodukt entsprechend 89 % Ausbeute erhalten.

### Beispiel 3:

200 g verunreinigtes POCl₃ wurde mit 2 g 5-Ethyl-2-methylpyridin versetzt und über eine .Kolonne fraktioniert destilliert. Es wurden 17 g (8,5 %) Vorlauf und 160 g (80 %) Hauptfraktion erhalten, der allen Spezifikationsanforderungen entsprach.

### Beispiel 4:

In einem 2,5 m³-Emailkessel mit Dampfheizung mit der in Beispiel 1 beschriebenen apparativen Gestaltung mit äquivalenter Trennleistung der Glaskolonne wurden 2500 kg POCI₃ enthaltend 400 ppm TOC aus einem Chlorierungsprozeß chargiert und mit 20 l n-Tributylamin versetzt, anschließend 30 Minuten am Rückflußkühler gekocht, dann bei einem Rücklaufverhältnis 1 : 3 bis zum konstanten Siedepunkt am Kopf der Kolonne 150 kg Vorlauf entnommen, anschließend auf Hauptfraktion umgestellt und bei einem Rücklaufverhältnis von 3 : 1 1700 kg POCl₃ abdestilliert. Die Destillation wurde unterbrochen, in den Kessel 1850 kg aus dem Chlorierungsprozeß gewonnenes, verunreinigtes POCl₃ nachchargiert und 15 l n-Tributylamin zugegeben, dann wieder wie vorher beschrieben destilliert, dabei wurden wieder 150 kg Vorlauf und 1470kg Reindestillat erhalten. Es wurden weitere 4 Nachchargierungen von insgesamt 7380 kg POCl₃ und 60 I n-Tributylamin durchgeführt. Aus 11630 kg rohenm POCl₃ wurden 9,9 t reines, spezifikationsgerechtes POCl₃, ca. 0,9 t Vorlauf, der wieder in den Chlorierungsprozeß zurückgeführt wurde, und 760 kg Destillationsrückstand, der noch ca. 70 % destillativ aufarbeitbares POCl₃ enthält, erhalten. Die Gesamtmenge an wiedergewonnenem und -verwertbarem POCl₃ betrug somit rund 11430 kg, das sind 97,4 % der eingesetzten POCl₃-Menge.

### Beispiel 5:

In einer Destillationsapparatur wie in Beispiel 1 beschrieben, wurden in einen 1I Kolben 440 ml oder 660 g Destillationsrückstand aus der in Beispiel 4 beschriebenen Destillation eingebracht und bis zum Siedepunkt des Reaktionsgemisches von 118 °C bei einem Rücklaufverhältnis von 2 : 1 280 ml reines POCl₃ rückgewonnen.
Der verbleibende schwarze, bei Raumtemperatur dickflüssige Rückstand kann durch Verbrennung in einer geeigneten Analge entsorgt werden.

## Patentansprüche

1. Verfahren zur Reinigung von rückgewonnenem oder regenerierten durch reaktive organische Verbindungen verunreinigtem Phosphoroxychlorid mit 0,1 bis 5 Gew.% eines organischen Amines mit 1 oder 2 tertiären N-Atomen und einem Siedepunkt über dem Siedepunkt von Phosphoroxychlorid und fraktionierte Destillation bei Normaldruck, **dadurch gekennzeichnet, dass** bei der fraktionierten Destillation, bis zum Erreichen des Siedepunktes von reinem Phosphoroxychlorid am Kopf der Destillationskolonne, ein Rücklaufverhältnis A:R von 1:1 bis 1:4 eingestellt wird und anschließend bei einem Rücklaufverhältnis A:R von 1:1 bis 4:1 das reine Phosphoroxychlorid entnommen wird.

2. Verfahren nach Anspruch 1, **dadurch gekennzeichnet, dass** die fraktionierte Destillation über eine Destillationskolonne mit 5 bis 10 theoretischen Böden durchgeführt wird.

3. Verfahren nach Anspruch 1, **dadurch gekennzeichnet, dass** der Destillationsrückstand in der Destillationsblase verbleibt und gemeinsam mit der nächsten Charge oder den gesammelten Vorläufen einer weiteren fraktionierten Destillation unterzogen wird.

## Claims

1. Process for the purification of recovered or regenerated phosphorus oxychloride contaminated by reactive organic compounds, which comprises reacting the contaminated phosphorus oxychloride with from 0.1 to 5% by weight of an organic amine, having 1 or 2 tertiary N-atoms and a boiling point above the boiling point of phosphorus oxychloride, and fractional distillation at atmospheric pressure **characterized in that**, during the fractional distillation, until the boiling point of pure phosphorus oxychloride is reached at the head of the distillation column, a reflux ratio of take-off : reflux of from 1:1 to 1:4 is set and, subsequently, the pure phosphorus oxychloride is removed at a reflux ratio of take-off : reflux of from 1:1 to 4:1.

2. Process according to Claim 1, **characterized in that** the fractional distillation is carried out in a distillation column having from 5 to 10 theoretical plates.

3. Process according to Claim 1, **characterized in that** the distillation residue remains in the distillation flask and, together with the next batch or the collected initial fractions, is subjected to a further fractional distillation.

## Revendications

1. Procédé de purification d'oxychlorure de phosphore récupéré ou régénéré, rendu impur par des composés organiques réactifs, avec 0,1 à 5 % en poids d'une amine organique ayant 1 ou 2 atomes d'azote tertiaire et un point d'ébullition situé au-delà du point d'ébullition de l'oxychlorure de phosphore, et de distillation fractionnée à la pression normale, **caractérisé en ce que**, lors de la distillation fractionnée, jusqu'à l'obtention du point d'ébullition de l'oxychlorure de phosphore pur dans la tête de la colonne de distillation, on ajuste un rapport de reflux A:R de 1:1 à 1:4 et ensuite, à un rapport de reflux A:R de 1:1 à 4:1, on soutire l'oxychlorure de phosphore pur.

2. Procédé selon la revendication 1, **caractérisé en ce qu'**on effectue la distillation fractionnée au moyen d'une colonne de distillation ayant de 5 à 10 fonds théoriques.

3. Procédé selon la revendication 1, **caractérisé en ce que** le résidu de distillation reste dans le ballon de distillation et est soumis à une distillation fractionnée supplémentaire conjointement avec la charge suivante ou avec des produits de tête rassemblés.
